# FASCICULE DE BREVET EUROPEEN

(11) **EP 0 976 960 B1**
(45) Date de publication et mention de la délivrance du brevet: **09.07.2003**
(21) Numéro de dépôt: 99401848.9
(22) Date de dépôt: 22.07.1999
(51) Int. Cl.: F16L 33/08

(54) **Collier de serrage à vis tangente**
Schneckengewindeschelle
Worm drive clamp

(30) Priorité: 29.07.1998 FR 9809690
(43) Date de publication de la demande: 02.02.2000
(73) Titulaire: Serflex, 94500 Champigny-sur-Marne (FR)
(72) Inventeur: Le Noan, Jacques, 78780 Conflans Ste Honorine (FR); Busson, Jean-Pierre, 93160 Noisy le Grand (FR)
(74) Mandataire: Intès, Didier Gérard André

(56) Documents cités:
- GB-A- 660 981
- US-A- 2 395 273
- US-A- 3 604 074

## Description

La présente invention concerne un collier de serrage à vis tangente. Ces colliers, très répandus dans l'industrie, comprennent une bande de métal enroulée sur elle-même, une vis de serrage et un boîtier qui présente une semelle et un capot, ce boîtier étant fixé à une première extrémité de la bande de telle sorte que le capot est situé du côté extérieur de la bande tandis que la semelle s'étend contre la face intérieure de la bande, la vis ayant un fût fileté qui est engagé dans le capot. La deuxième extrémité de la bande est susceptible d'être insérée dans le capot, entre le fût fileté de la vis et la première extrémité de la bande, le fût fileté de la vis étant susceptible de coopérer avec ladite deuxième extrémité pour serrer le collier.

Un tel collier sert en général à maintenir emmanché un tuyau relativement souple (par exemple en caoutchouc) sur un tube rigide. Il assure ainsi une liaison entre ce tuyau et ce tube qui doit résister à la traction et qui, de plus, doit en général être étanche vis-à-vis du fluide qui circule dans ce tuyau et dans ce tube.

Classiquement, la bande de métal et le boîtier sont découpés et formés à partir de feuillards de faible épaisseur. Ces pièces, soumises à la sollicitation du couple de serrage, ont tendance à se déformer relativement facilement, ce qui constitue un handicap à la bonne tenue du collier sur les objets à serrer et donc au caractère étanche de la liaison entre ces objets.

Sous l'effet du couple de serrage, la vis transforme une partie du mouvement de rotation auquel elle est soumise en une force de traction sur la bande, ce qui serre le collier. L'autre partie de ce mouvement, sous l'effet des frottements, donne un couple qui a tendance à faire tourner le collier autour de l'axe de la vis. Ce couple parasite, appelé "couple de renversement" est équilibré, d'une part, par les objets à serrer ou à étancher et, d'autre part, par le boîtier qui unit la vis à la bande. Ainsi, ce boîtier a tendance à basculer dans le sens de rotation de la vis. Pour éviter cette tendance, il faut que le boîtier soit très solidement fixé à la bande. Dans le même temps, il est nécessaire que cette fixation soit réalisée de manière aussi simple et aussi économique que possible.

L'invention vise à proposer un mode de fixation du boîtier sur la bande qui satisfasse à cette double exigence.

Ce but est atteint grâce à un collier de serrage selon la revendication 1.

Grâce à ces dispositions, au moins dans la région du deuxième élément de fixation, le boîtier est maintenu par rapport à la bande en pinçant cette bande entre les première et deuxième parties de ce deuxième élément de fixation. De ce fait, lorsque la liaison entre le boîtier et la bande est soumise au couple de renversement, la deuxième partie du deuxième élément de fixation qui est située sous la face intérieure de la bande fournit un effort de réaction contre cette face intérieure, repoussant d'autant la limite du basculement.

Avantageusement, la bande présente un soyage qui est disposé au voisinage de la deuxième fenêtre et qui forme, sur la face intérieure de la bande, un renfoncement dans lequel est disposée la deuxième partie du deuxième élément.

Dans cette disposition, cette deuxième partie est calée dans le renfoncement, ce qui améliore encore la fixation du boîtier sur la bande.

Selon une configuration avantageuse, la semelle du boîtier est formée par deux ailes de ce boîtier qui sont repliées sous la face intérieure de la bande, le premier et le deuxième élément de fixation comprennent chacun deux pattes qui sont respectivement solidaires de chacune des deux ailes du boîtier et qui sont disposées l'une à côté de l'autre, et les deux pattes du premier élément passent dans la première fenêtre, tandis que seule une patte du deuxième élément passe dans la deuxième fenêtre, l'autre patte de ce deuxième élément s'étendant contre la face intérieure de la bande.

En fait, ces deux ailes forment des extrémités latérales du boîtier, les bords d'extrémité de ces ailes s'étendant sensiblement selon la longueur de la bande en étant adjacents l'un à l'autre après le pliage des ailes. Le boîtier est par exemple formé par découpage d'un feuillard, auquel on applique plusieurs opérations de pliage successives pour former le capot du boîtier, puis pour replier les ailes de ce dernier sous la bande et pour fixer le boîtier à cette bande. Pour former les éléments de fixation, il suffit, lors de la découpe du feuillard, de conformer les extrémités latérales du boîtier de telle sorte qu'elles présentent chacune des pattes s'étendant longitudinalement, des bords longitudinaux de ces pattes s'étendant de préférence en prolongement des bords d'extrémité des ailes.

Ensuite, on conforme les pattes qui forment le premier élément de telle sorte qu'elles passent toutes deux à travers la première fenêtre de la bande, tandis que seule une des pattes du deuxième élément passe à travers la deuxième fenêtre et que l'autre patte est disposée contre la face intérieure de la bande, éventuellement dans le soyage évoqué ci-dessus.

L'invention sera bien comprise et ses avantages apparaîtront mieux à la lecture de la description détaillée qui suit, d'un mode de réalisation représenté à titre d'exemple non limitatif.

La description se réfère aux dessins annexés sur lesquels :
- la figure 1 est une vue partielle en élévation latérale d'un collier à vis auquel s'applique l'invention,
- la figure 2 est une perspective montrant la première extrémité de la bande du collier avant la fixation du boîtier sur cette dernière,
- la figure 3 montre, en perspective, la première extrémité de la bande équipée du boîtier,
- la figure 4 est une vue de dessous, selon la flèche IV, de la figure 3, et
- les figures 5 et 6 sont deux coupes longitudinales respectivement prises selon les lignes V-V et VI-VI de la figure 4.

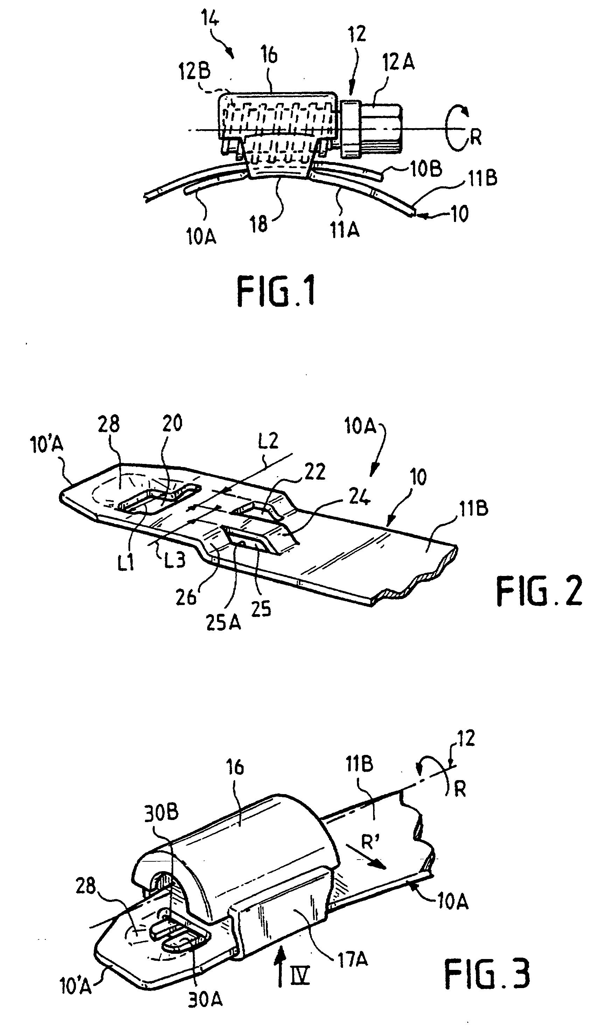

Le collier de la figure 1 comporte une bande de métal 10 enroulée sur elle-même, dont seules les parties d'extrémité 10A et 10B sont représentées. Le collier comporte une vis de serrage 12 disposée dans un boîtier 14, qui comporte un capot 16 s'étendant du côté extérieur du collier et une semelle 18 fixée à la première extrémité 10A de la bande. La semelle s'étend contre la face intérieure 11A de la bande, dans la région de la première extrémité 10A de cette dernière. La vis 12 présente une tête de vissage 12A qui s'étend à l'extérieur du capot 16 et un fût fileté 12B, indiqué en trait interrompu, qui s'étend à l'intérieur de ce capot.

On considère que la direction allant vers l'intérieur est celle qui est dirigée vers le centre du cercle formé par l'enroulement de la bande du collier.

On voit que la deuxième extrémité 10B de la bande est insérée dans le capot, entre la première portion de bande 10A et le fût fileté 12B de la vis. Ainsi, la deuxième extrémité de la bande repose, au moins dans le boîtier, sur la face extérieure 11B de la bande au voisinage de la première extrémité de cette dernière.

Classiquement, au moins la deuxième extrémité 10B de la bande est pourvue de surfaces d'appui (fentes ou reliefs en crémaillère) avec lesquelles les filets de la vis sont aptes à coopérer lors du vissage de cette dernière pour serrer le collier.

Sur la figure 2, on voit que la première extrémité 10A de la bande présente une première fenêtre 20, ménagée au voisinage de son extrémité libre 10'A, et une deuxième fenêtre 22, située en arrière de la première fenêtre dans le sens allant vers la deuxième extrémité 10B de la bande. Globalement, la largeur courante L1 de la fenêtre 20, mesurée transversalement à la bande, est sensiblement égale au double de la largeur courante L2 de la fenêtre 22.

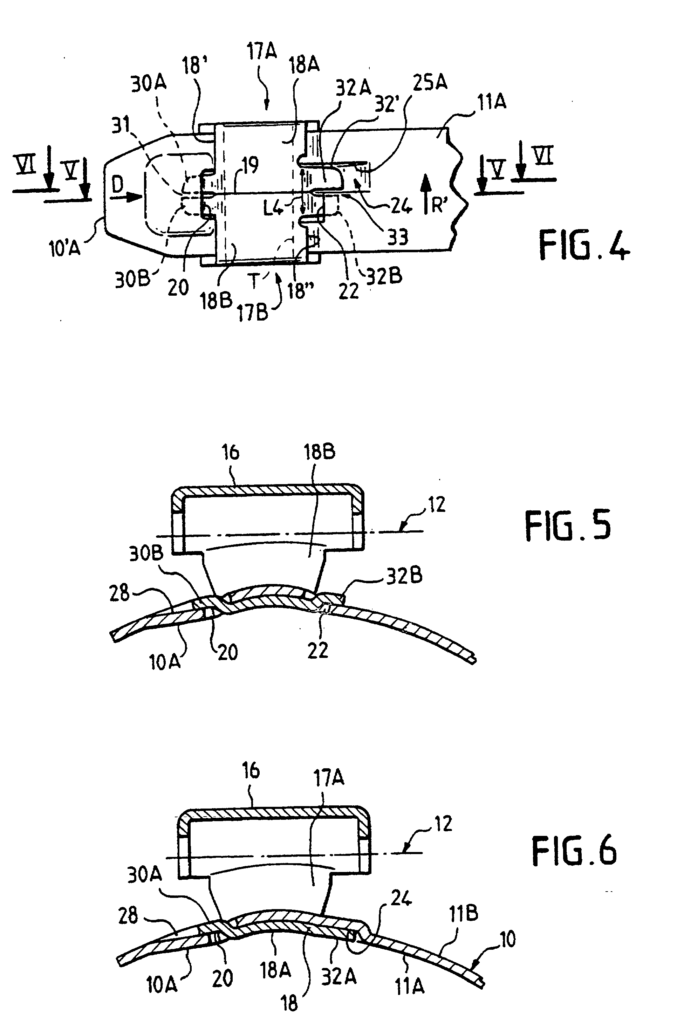

A côté de la fenêtre 22, est ménagé un soyage 24, qui forme un bossage sur la face extérieure 11B de la bande et qui, sur la face intérieure 11A de cette bande, comme on le voit mieux sur la figure 4, forme un renfoncement. Le soyage est disposé à côté de la fenêtre 22 de telle sorte que la largeur de la bande occupée par l'ensemble constitué par la fenêtre 22 et le soyage 24, c'est-à-dire la somme de la largeur L2 de la fenêtre 22 et de la largeur L3 du soyage 24, est sensiblement égale à la largeur L1 de la fenêtre 20.

On voit que, dans la région de la fenêtre 22 et du soyage 24, la première extrémité 10A de la bande forme un ressaut 26. Ainsi, l'épaisseur de la semelle 18 du boîtier pourra être logée dans la hauteur de ce ressaut et la face intérieure de la semelle pourra se situer au même niveau radial que la face intérieure 11A de la bande (figure 1). On voit en outre que le bord avant (le plus proche de l'extrémité libre 10'A) de la fenêtre 20 s'étend dans une légère dépression 28 formée sur la face extérieure 11B de la bande.

Comme on le voit sur la figure 3, le capot 16 du boîtier présente une paroi axiale (dans le sens de la longueur de la bande) qui a la forme d'une portion de cylindre pour recevoir la vis. A partir de cette portion de cylindre, s'étendent des ailes 17A et 17B, chacune d'entre elles ayant une partie qui forme une paroi latérale du boîtier et une partie d'extrémité, respectivement 18A et 18B, qui est repliée contre la face intérieure 11A de la bande.

Ces parties d'extrémité 18A et 18B forment, à elles deux, la semelle 18. Les bords longitudinaux d'extrémité de ces ailes sont placés bord à bord comme l'indique la ligne 19. La partie 18A de l'aile 17A présente, dans le prolongement de son bord longitudinal d'extrémité, une première patte 30A qui s'étend vers l'extrémité libre 10'A de la bande et une deuxième patte 32A qui s'étend dans l'autre sens. De même, la partie 18B de l'aile 17B présente une première patte 30B et une deuxième patte 32B, respectivement analogues aux pattes 30A et 32A.

Ainsi, lorsque les parties 18A et 18B des ailes sont repliées contre la face intérieure de la bande, les deux pattes 30A et 30B sont juxtaposées en étant séparées par une découpe 31 qui correspond au prolongement des bords longitudinaux des deux ailes, de même que les deux pattes 32A et 32B sont juxtaposées en étant séparées par une découpe 33.

Les deux pattes 30A et 30B passent à travers la fenêtre 20 pour s'étendre du côté extérieur de la bande en étant disposées dans la dépression 28. Ainsi, les faces externes de ces deux pattes sont sensiblement au même niveau que la surface courante de la face extérieure 11B.

En revanche, seule la patte 32B passe à travers la fenêtre 22 pour s'étendre contre la face extérieure 11B de la bande, tandis que la patte 32A est, comme le reste de la partie 18A de la semelle, située contre la face intérieure 11A. Pour passer à travers les fenêtres 20 et 22, les pattes 30A, 30B et 32B sont coudées vers l'extérieur, comme on le voit sur les figures 5 et 6. En revanche, la patte 32A est sensiblement rectiligne (en suivant toutefois la courbure de la bande).

Sur la figure 2, on voit que le soyage 24 est non seulement formé par emboutissage, mais également par une découpe longitudinale 25 au moins du côté du soyage qui est éloigné de la fenêtre 22. Cette découpe 25 laisse subsister dans la bande un bord vif de blocage 25A. On comprend sur la figure 4, que le bord longitudinal 32' de la patte 32A qui est opposé à la découpe 33 peut ainsi coopérer avec ce bord 25A. Ceci évite tout débattement latéral de cette patte, puisque, du côté de la découpe 33, elle est bloquée par la portion de bande qui s'étend dans la découpe 33, entre les pattes 32A et 32B.

Des pattes 30A et 30B forment, considérées ensemble, le premier élément de fixation. Il se trouve qu'elles forment deux parties distinctes, séparées par la découpe 31. On pourrait éventuellement envisager que la largeur de la fenêtre 20 soit réduite et que seule une des pattes, la patte 30A passe à travers cette fenêtre, tandis que l'autre patte, par exemple la patte 30B resterait contre la face intérieure de la bande comme la patte 32A. Les pattes 32A et 32B forment, considérées ensemble, le deuxième élément de fixation, la patte 32B étant la première partie, tandis que la patte 32A est la deuxième partie. La largeur L2 de la fenêtre 22 est inférieure à la largeur totale L4 des pattes 32A et 32B. Pour faciliter l'insertion de la patte 32B, elle est légèrement supérieure à la largeur de cette patte.

Dans l'exemple représenté, ces premier et deuxième éléments forment donc une première et une deuxième extension qui s'étendent sur deux bords 18' et 18" opposés de la semelle, ces bords étant dirigés sensiblement transversalement par rapport à la bande. Ces extensions sont quant à elles dirigées axialement, c'est-à-dire dans le sens de la longueur de la bande.

Toutefois, on pourrait envisager que ces premier et deuxième éléments de fixation ne se trouvent pas aux extrémités de la semelle. Globalement, on considère donc que les premier et deuxième éléments de fixation s'étendent de part et d'autre d'une région T de la semelle transversale à la bande (cette région T est indiquée en trait interrompu sur la figure 4). Les premier et deuxième éléments de fixation peuvent d'ailleurs être disposés symétriquement par rapport à un axe transversal à la bande.

Sur les figures 1 et 3, on a indiqué par la référence R le sens de rotation de la vis lors de son vissage. Ce vissage se traduit par un déplacement transversal dans le sens R' de la vis contre la portion de bande avec laquelle elle est en contact (la deuxième extrémité 10B), ce sens R' étant indiqué sur les figures 3 et 4. Le couple de renversement a tendance à soulever par rapport à la bande la région du boîtier qui se trouve en aval du point de contact entre les filets de la vis et la bande dans le sens R'. C'est précisément dans cette région que se trouve la partie de semelle 18A. Pour éviter cette tendance au soulèvement, on choisit de préférence que la patte 32A qui est disposée contre la face intérieure 10A de la bande soit justement celle des pattes 32A et 32B du deuxième élément qui se trouve en aval de l'autre patte de ce deuxième élément dans le sens R'.

Comme on l'a indiqué sur les dessins, on choisit avantageusement que la première fenêtre 20 de la bande soit celle des première et deuxième fenêtres 20 et 22 qui est la plus proche du bord libre 10'A de la première extrémité 10A de la bande. En d'autres termes, dans ce cas, la partie (patte 32A) du deuxième élément de fixation qui reste contre la face intérieure de la bande est située dans une région du boîtier éloignée de ce bord libre 10'A, région proche de la tête 12A de la vis.

En effet, lors du serrage du collier, la deuxième extrémité 10B de la bande est fortement plaquée contre toute la région de la première extrémité 10A qui est située entre le bord libre 10'A et la zone de contact des filets de la vis avec la deuxième extrémité 10B. Par conséquent, dans cette région, même lorsque les couples parasites sont élevés, le boîtier est finalement maintenu par réaction entre les objets serrés à l'aide du collier et la deuxième extrémité de la bande.

En revanche, à la sortie du boîtier, c'est-à-dire dans la région opposée au bord libre 10'A, la deuxième extrémité de la bande est libre. C'est donc précisément dans cette région, dans laquelle les couples parasites risquent d'avoir davantage d'influence, que l'on choisit d'améliorer la fixation du boîtier à l'aide de la patte 32A qui reste contre la face interne de la bande.

Comme on le voit sur les figures, les premier et deuxième éléments de fixation formés par les pattes 30A, 30B, 32A et 32B sont alignés selon la direction longitudinale D de la bande. La ligne 19 de jonction des bords libres des ailes repliées 18A et 18B se trouve avantageusement sensiblement au milieu de la largeur de la bande.

Il faut noter que, par rapport à une situation dans laquelle les pattes 32A et 32B traverseraient une fenêtre 22 analogue à la fenêtre 20 que traversent les pattes 30A et 30B, on obtient, outre l'effet anti-basculement évoqué précédemment, un autre avantage lié à la moindre dimension de la fenêtre 22. En effet, en diminuant la taille de l'ajourage formé par la fenêtre 22, on augmente la résistance mécanique intrinsèque de la bande à la traction et à la torsion.

## Revendications

1. Collier de serrage comprenant une bande de métal (10) enroulée sur elle-même, une vis de serrage (12) et un boîtier (14) qui présente une semelle (18) et un capot (16), ce boîtier étant fixé à une première extrémité (10A) de la bande de telle sorte que le capot est situé du côté extérieur de la bande tandis que la semelle (18) s'étend contre la face intérieure (11A) de la bande, la vis ayant un fût fileté (12B) qui est engagé dans le capot (16), la deuxième extrémité (10B) de la bande (10) étant destinée à être insérée dans le capot, entre le fût fileté (12B) de la vis et la première extrémité (10A) de la bande, le fût fileté de la vis étant susceptible de coopérer avec ladite deuxième extrémité (10B) pour serrer le collier, la semelle du boîtier comportant un premier et un deuxième élément de fixation (30A, 30B ; 32A, 32B) qui sont dirigés sensiblement selon la longueur de la bande (10) et qui s'étendent de part et d'autre d'une région (T) de la semelle transversale à la bande et la première extrémité (10A) de la bande (10) présentant une première fenêtre (20) à travers laquelle passe au moins une partie du premier élément (30A, 30B) pour s'étendre du côté extérieur (11B) de la bande,
**caractérisé en ce que** la première extrémité (10A) de la bande présente, en outre, une deuxième fenêtre (22) dont la largeur (L2), mesurée selon une direction transversale à la bande, est tout au plus égale à une portion de la largeur (L4) du deuxième élément (32A, 32B), ce dernier ayant une première partie qui passe à travers la deuxième fenêtre (22) pour s'étendre du côté extérieur (11B) de la bande et une deuxième partie, qui est séparée de la première partie par une découpe longitudinale et qui s'étend contre la face intérieure (11A) de la bande (10) à côté de ladite deuxième fenêtre (22).

2. Collier selon la revendication 1, **caractérisé en ce que** le premier et le deuxième élément de fixation (30A, 30B ; 32A, 32B) comprennent respectivement une première et une deuxième extension qui s'étendent sur deux bords (18' 18") de la semelle dirigés sensiblement transversalement par rapport à la bande.

3. Collier selon la revendication 1 ou 2, **caractérisé en ce que** la bande présente un soyage (24) qui est disposé au voisinage de la deuxième fenêtre (22), et qui forme, sur la face intérieure (11A) de la bande (10), un renfoncement dans lequel s'étend la deuxième partie du deuxième élément.

4. Collier selon l'une quelconque des revendications 1 à 3, **caractérisé en ce que** la semelle (18) du boîtier est formée par deux ailes (18A, 18B) de ce boîtier qui sont repliées sous la face intérieure (11A) de la bande (10), **en ce que** le premier et le deuxième élément de fixation comprennent chacun deux pattes (30A, 30B ; 32A, 32B) qui sont respectivement solidaires de chacune des deux ailes du boîtier et qui sont disposées l'une à côté de l'autre, et **en ce que** les deux pattes (30A, 30B) du premier élément passent dans la première fenêtre (20), tandis que seule une patte (32B) du deuxième élément passe dans la deuxième fenêtre (22), l'autre patte (32A) de ce deuxième élément s'étendant contre la face intérieure (11A) de la bande (10).

5. Collier selon la revendication 4, **caractérisé en ce que** la patte (32B) du deuxième élément de fixation qui passe dans la deuxième fenêtre (22) est celle des deux pattes (32A, 32B) dudit deuxième élément qui se trouve en amont de l'autre patte de ce deuxième élément dans le sens (R') du déplacement transversal de la vis (12) contre la bande (10B) lors du vissage de cette vis.

6. Collier selon l'une quelconque des revendications 1 à 5, **caractérisé en ce que** la première fenêtre (20) de la bande (10) est celle des première et deuxième fenêtres (20, 22) qui est la plus proche du bord libre (10'A) de la première extrémité (10') de la bande.

7. Collier selon l'une quelconque des revendications 1 à 6, **caractérisé en ce que** les premier et deuxième éléments de fixation (30A, 30B ; 32A, 32B) sont alignés selon la direction longitudinale (D) de la bande (10).

## Patentansprüche

1. Klemmschelle mit einem auf sich selbst aufgewickelten Metallband (10), einer Klemmschraube (12) und einem Gehäuse (14), welches eine Sohle (18) und eine Haube (16) aufweist, wobei das Gehäuse an einem ersten Ende (10A) des Bands derart befestigt ist, dass sich die Haube auf der äußeren Seite des Bands befindet, während sich die Sohle (18) gegen die innere Oberfläche (11A) des Bands erstreckt, wobei die Schraube einen Schaft (12B) mit Gewinde hat, der in die Haube (16) eingreift, wobei das zweite Ende (10B) des Bands (10) dazu bestimmt ist, in die Haube eingeführt zu werden, und zwar zwischen dem Schraubenschaft (12B) mit Gewinde und dem ersten Ende (10A) des Bands, wobei der Schraubenschaft mit Gewinde dazu geeignet ist, mit dem zweiten Ende (10B) zusammenzuwirken, um die Schelle zusammenzudrücken, wobei die Sohle des Gehäuses ein erstes und ein zweites Befestigungselement (30A, 30B; 32A, 32B) umfasst, die im Wesentlichen längs der Längserstreckung des Bands (10) geführt sind, und die sich beiderseits eines zum Band quer verlaufenden Bereichs (T) der Sohle erstrecken, und wobei das erste Ende (10A) des Bands (10) ein erstes Fenster (20) aufweist, durch welches zumindest ein Teil des erstes Elements (30A, 30B) verläuft, um sich an der äußeren Seite (11B) des Bands zu erstrecken,
**dadurch gekennzeichnet, dass** das erste Ende (10A) des Bands ferner ein zweites Fenster (22) aufweist, dessen Breite (L2), gemessen in einer zum Band quer verlaufenden Richtung, höchstens gleich einem Teil der Breite (L4) des zweiten Elements (32A, 32B) ist, wobei letzteres einen ersten Teil, der durch das zweite Fenster (22) verläuft, um sich an der äußeren Seite (11B) des Bands zu erstrecken, sowie einen zweiten Teil aufweist, der mittels eines Längsschnitts von dem ersten Teil getrennt ist, und der sich gegen die innere Oberfläche (11A) des Bands (10) neben dem zweiten Fenster (22) erstreckt.

2. Schelle nach Anspruch 1, **dadurch gekennzeichnet, dass** das erste und das zweite Befestigungselement (30A, 30B; 32A, 32B) jeweils einen ersten und einen zweiten verlängerten Teil aufweisen, die sich an zwei Rändern (18', 18") der Sohle im Wesentlichen quer zum Band ausgerichtet erstrecken.

3. Schelle nach Anspruch 1 oder 2, **dadurch gekennzeichnet, dass** das Band einen Auszug (24) aufweist, der in der Nähe des zweiten Fensters (22) angeordnet ist, und der an der inneren Oberfläche (11A) des Bands einen Rücksprung bildet, in welchem sich der zweite Teil des zweiten Elements erstreckt.

4. Schelle nach einem der Ansprüche 1-3, **dadurch gekennzeichnet, dass** die Sohle (18) des Gehäuses von zwei Flügeln (18A, 18B) des Gehäuses gebildet ist, die unter der unteren Oberfläche (11A) des Bands (10) umgebogen sind, dass das erste und zweite Befestigungselement jeweils zwei Füße (30A, 30B; 32A, 32B) aufweisen, die entsprechend mit jedem der beiden Flügel des Gehäuses verbunden sind, und die nebeneinander angeordnet sind, und dass die zweiten Füße (30A, 30B) des ersten Elements durch das erste Fenster (20) verlaufen, während nur ein Fuß (32B) des zweiten Elements durch das zweite Fenster (22) verläuft, wobei sich der andere Fuß (32A) dieses zweiten Elements gegen die innere Oberfläche (11A) des Bands (10) erstreckt.

5. Schelle nach Anspruch 4, **dadurch gekennzeichnet, dass** der Fuß (32B) des zweiten Befestigungselements, der durch das zweite Fenster (22) verläuft, derjenige der beiden Füße (32A, 32B) des zweiten Elements ist, der sich in der Richtung (R') der Querbewegung der Schraube (12) gegen das Band (10B) während des Festschraubens dieser Schraube vor dem anderen Fuß dieses zweiten Elements befindet.

6. Schelle nach einem der Ansprüche 1-5, **dadurch gekennzeichnet, dass** das erste Fenster (20) des Bands (10) dasjenige der ersten und zweiten Fenster (20, 22) ist, welches dem freien Rand (10'A) des ersten Endes (10') des Bands am nächsten ist.

7. Schelle nach einem der Ansprüche 1-6, **dadurch gekennzeichnet, dass** das erste und das zweite Befestigungselement (30A, 30B; 32A, 32B) in der Längsrichtung (D) des Bands (10) ausgerichtet sind.

## Claims

1. Clamping collar comprising a metal band (10) wound on itself, a clamping screw (12) and a case (14) which has a shoe (18) and a cover (16), this case being fixed co a first end (10A) of the band in such a manner that the cover is situated on the outer side of the band while the shoe (18) extends against the inner face (11A) of the band, the screw having a threaded shank (12B) which is engaged in the cover (16), the second end (10B) of the band (10) being intended to be inserted in the cover, between the threaded shank (12B) of the screw and the first end (10A) of the band, the threaded shank of the screw being able to co-operate with the said second end (10B) to tighten the collar, the shoe of the case including a first and a second fixing element (30A, 3DB; 32A, 32B) which are directed substantially along the length of the band (10) and which extend on either side of a region (T) of the shoe transversal to the band and the first end (10A) of the band (10) having a first aperture (20) through which at least a part of the first element (30A, 30B) passes to extend on the outer side (11B) of the band,
**characterised by** the fact that the first end (10A) of the band also has a second aperture (22) the width (L2) of which, measured in a direction transversal to the band, is at moat equal co a portion of the width (L4) of the second element (32A, 32B), the latter having a first part which passes through the second aperture (22) to extend on the outer side (11B) of the band and a second part, which is separated from the first part by a longitudinal cut and which extends against the inner face (11A) of the band (10) beside the said second aperture (22).

2. Collar as described in claim 1, **characterised by** the fact that the first and the second fixing element (30A, 30B; 32A, 32B) respectively include a first and a second extension which extend on two edges (18', 18") of the shoe directed substantially transversally relative to the band.

3. Collar as described in claim 1 or 2, **characterised by** the fact that the band has a joggle (24) which is arranged in the vicinity of the second aperture (22) and which forms, on the inner face (11A) of the band (10), a recess into which extends the second part of the second element.

4. Collar as described in any one of claims 1 to 3, **characterised by** the fact that the shoe (18) of the case is formed by two wings (18A, 18B) of this case which are folded under the inner face (11A) of the band (10), by the fact chat the first and the second fixing element each comprise two tabs (30A, 30B; 32A, 32B) which are respectively firmly attached to each of the two wings of the case and which are arranged one beside the other, and by the fact that the two tabs (30A, 30B) of the first element pass into the first aperture (20), while only one tab (32B) of the second element passes into the second aperture (22), the other cab (32A) of this second element extending against the inner face (11A) of the band (10).

5. Collar as described in claim 4, **characterised by** the fact that the tab (32B) of the second fixing element which passes into the second aperture (22) is the one of the two tabs (32A, 32B) of the said second element which is upstream of the other tab of this second element in the direction (R') of the transversal displacement of the screw (12) against the band (10B) on screwing-up of this screw.

6. Collar as described in any one of claims 1 to 5, **characterised by** the fact that the first aperture (20) of the band (10) is the one of the first and second apertures (20, 22) which is closest to the free edge (10'A) of the first end (10') of the band.

7. Collar as described in any one of claims 1 to 6, **characterised by** the fact that the first and second fixing elements (30A, 30B; 32A, 32B) are aligned in the longitudinal direction (D) of the band (10).
